# FASCICULE DE BREVET EUROPEEN

(11) **EP 0 795 519 B1**
(45) Date de publication et mention de la délivrance du brevet: **15.09.1999**
(21) Numéro de dépôt: 97400555.5
(22) Date de dépôt: 13.03.1997
(51) Int. Cl.: C03B 37/018, C03B 37/012, C03B 23/043, F27D 7/02

(54) **Dispositif d'injection de gaz non oxydant à l'intérieur d'un four**
Vorrichtung zum Einblasen von einem nicht oxidierenden Gas an der Innenseite eines Ofens
Device for injecting non-oxidising gas inside a furnace

(30) Priorité: 14.03.1996 FR 9603224
(43) Date de publication de la demande: 17.09.1997
(73) Titulaire: ALCATEL, 75008 Paris (FR)
(72) Inventeur: Orcel, Gérard, 78600 Maison Lafitte (FR); Regnier, Jean-François, 78310 Maurepas (FR)
(74) Mandataire: Feray, Valérie

(56) Documents cités:
- EP-A- 0 519 834
- DE-A- 3 731 346
- FR-A- 2 340 519
- GB-A- 1 523 595
- US-A- 4 030 901
- PATENT ABSTRACTS OF JAPAN vol. 6, no. 239 (C-137), 26 Novembre 1982 & JP 57 140330 A (NT&T CORP.), 30 Août 1982,

## Description

La présente invention concerne les fours dont l'enceinte est chauffée par un élément chauffant en graphite tels les fours à induction comportant un suscepteur en graphite, et en particulier un dispositif d'injection de gaz non oxydant à l'intérieur d'un four de ce type.

Les fours à induction comportant un suscepteur en graphite sont utilisés en particulier dans le domaine des fibres optiques. Les fibres optiques sont en effet fabriquées à partir de préformes qui se présentent sous forme de barreaux cylindriques dont l'obtention nécessite une opération de rétreint. Dans cette opération, une préforme primaire qui est un barreau de silice creux, est chauffée à haute température dans un four de façon à être transformée en barreau plein ayant subi une fusion pâteuse à l'intérieur au four au cours de laquelle le diamètre de la préforme s'est restreint.

Au cours d'une opération de rétreint d'une préforme primaire, soit la préforme est en déplacement par rapport au four, soit c'est le four qui est en mouvement de translation par rapport à la préforme. Ce déplacement en translation s'effectue à des vitesses pouvant atteindre 500 mm/mn, ce qui rend difficile le contrôle de l'atmosphère interne en raison principalement de l'effet lié au déplacement de matière à l'intérieur de l'enceinte du four. Cependant, il faut éviter toute entrée d'air et donc d'oxygène dans l'enceinte qui aurait pour principale conséquence la combustion du graphite et une réduction de la durée de vie du suscepteur en graphite.

Une solution décrite dans l'article "R.F. Induction furnace for silica-fibre drawing" de Electronics letters 1976, vol. 12, consiste à utiliser un flux d'argon continu dans l'enceinte du four. Mais cette solution est utilisée dans l'étirage de la préforme en une fibre optique où la vitesse de déplacement de la fibre par rapport au four est très faible (quelques mm/minute), et ne serait pas satisfaisante dans l'opération de rétreint mentionnée ci-dessus.

Le document DE-37 31 346 concerne l'injection de flammes annulaires empêchant l'entrée d'oxygène dans le four.

L'abrégé du document JP-A-57 140 330 décrit un four pour la fabrication de fibres optiques dans lequel de l'azote est injecté à chaque extrémité du four au moyen de buses en forme de cônes pour empêcher les inpuretés de pénétrer dans le four. Ce procédé n'est pas assez efficace pour empêcher l'entrée d'air dans le four.

C'est pourquoi le but principal de l'invention est de fournir un dispositif d'injection de gaz non oxydant dans un four dont l'élément chauffant est en graphite, qui empêche toute entrée d'air dans le four pouvant provoquer la combustion du graphite.

L'objet de l'invention est donc un dispositif d'injection de gaz non oxydant dans un four comprenant un élément chauffant en graphite utilisé pour chauffer un objet longiforme dont une partie se trouve dans l'enceinte du four, l'objet et le four étant en déplacement relatif l'un par rapport à l'autre selon la direction axiale du four. Ce dispositif comprend à chacun des orifices d'entrée ou de sortie de l'enceinte deux anneaux de conduits de passage de gaz non oxydant, les conduits de chacun des anneaux étant inclinés d'un même angle par rapport à la direction axiale du four, cet angle étant différent pour les deux anneaux de conduits, de manière à injecter le gaz non oxydant selon deux rideaux de gaz en forme de cône, le gaz étant dirigé vers le sommet du cône et dans la direction s'éloignant de l'enceinte dans le but d'empêcher toute entrée d'air dans l'enceinte pouvant provoquer la combustion du graphite de l'élément chauffant.

Les buts, objets et caractéristiques de l'invention apparaîtront plus clairement à la lecture de la description qui suit faite en référence aux dessins dans lesquels :
la figure 1 est une représentation schématique en coupe d'un four à induction comportant un suscepteur en graphite et disposant d'un dispositif selon l'invention,
la figure 2 est une représentation schématique en perspective d'un four à induction selon la figure 1 et montrant le pyromètre pour mesurer la température ainsi que le tube d'accès du gaz non oxydant,
la figure 3 est une vue en coupe d'une chambre d'injection formant un rideau de gaz non oxydant utilisé dans le dispositif de la figure 1, cette chambre d'injection ne faisant pas partie de la présente invention,
la figure 4 est une vue en coupe d'une chambre d'injection formant deux rideaux de gaz non oxydant utilisée dans le dispositif selon l'invention.

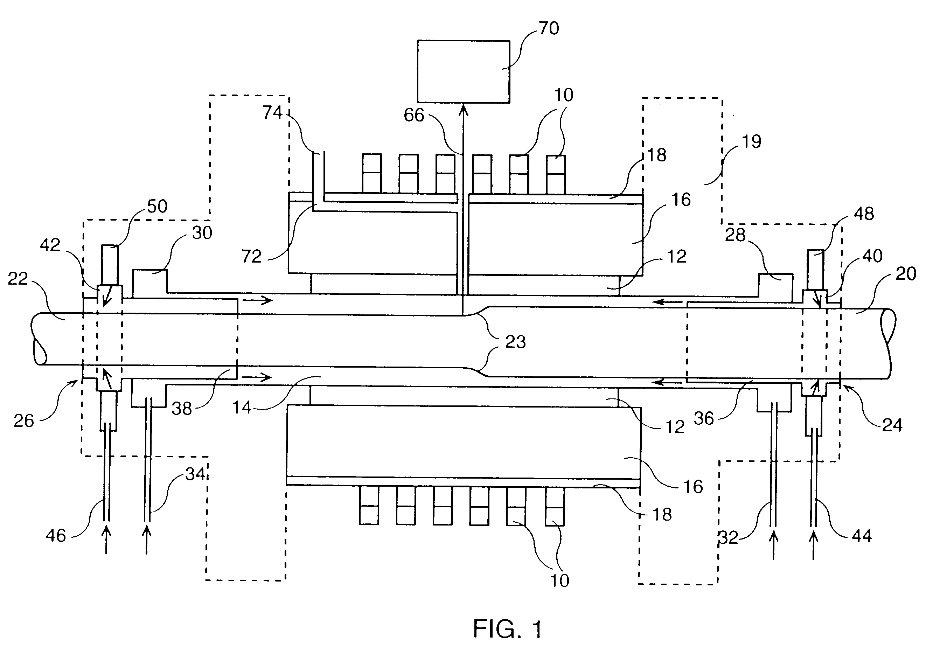

Selon l'invention, un four à induction tel qu'illustré sur la figure 1 est un four cylindrique comprenant principalement un inducteur formé des spires 10 et destiné à induire un champs électromagnétique R.F., et un induit ou suscepteur en graphite 12 entourant l'enceinte 14 du four. Le suscepteur en graphite 12 est entouré d'une enveloppe d'isolation thermique 16 généralement en feutre de graphite et d'une enceinte extérieure en silice 18. Le four comprend d'autres éléments qui ne sont pas indispensables ou nécessaires pour le fonctionnement du dispositif selon l'invention et qui sont inclus dans l'enceinte générale 19 représentée par une ligne en pointillés sur la figure 1.

Un tel four peut être utilisé pour le rétreint d'une préforme primaire 20 qui se présente sous la forme d'un barreau creux d'environ 30 mm de diamètre qu'il faut transformer en une préforme 22 utilisable pour l'étirage de la fibre optique, c'est à dire un barreau plein d'un diamètre d'environ 20 mm. Cette transformation se produit principalement vers le milieu du four porté à une température d'environ 2000°C, et se manifeste par le rétrécissement 23.

La préforme 20, 22 pénètre dans la four par l'orifice d'entrée 24 et sort par l'orifice de sortie 26 avec une vitesse de translation pouvant atteindre 500 mm/mn. Mais il est possible de prévoir que la préforme soit immobile et que ce soit le four qui soit mû en translation.

De façon à éviter la combustion du suscepteur en graphite 12 qui ne manquerait pas de se produire à la température élevée régnant à l'intérieur de l'enceinte 14 en présence d'air, on injecte un gaz non oxydant dans l'enceinte. Cette injection se fait à chaque orifice du four à partir d'une chambre d'injection annulaire 28 à l'orifice d'entrée, et d'une chambre d'injection annulaire 30 à l'orifice de sortie. Le gaz est introduit dans chaque chambre par un tube d'entrée 32 pour la chambre d'injection 28 et par un tube d'entrée 34 pour la chambre d'injection 30. Chacune des chambres d'injection entoure une bague de diamètre légèrement inférieur au diamètre de l'enceinte du four, la bague 36 pour la chambre 28 et la bague 38 pour la chambre 30, de manière à ce que le gaz non oxydant introduit sous pression dans la chambre d'injection s'écoule dans une direction axiale vers le centre de l'enceinte (voir les flèches sur la figure). Ce flux de gaz injecté à chaque extrémité de l'enceinte du four permet de maintenir ainsi une légère surpression de gaz non oxydant dans l'enceinte du four de façon à empêcher toute entrée d'air qui pourrait entraîner la combustion du graphite.

Mais cette surpression à l'intérieur de l'enceinte n'est pas suffisante pour empêcher toute entrée d'air dans l'enceinte du fait du déplacement relatif entre le four et la préforme. C'est pourquoi il est prévu à chaque extrémité de l'enceinte une autre chambre d'injection 40 du côté entrée et 42 du côté sortie. Ces chambres d'injection, annulaires également, envoient vers l'intérieur des flux de gaz non oxydant sous pression présentant un certain angle avec la direction axiale (voir les flèches sur la figure) de façon à créer des rideaux coniques de gaz à chaque extrémité de l'enceinte, le sommet du cône formé par chaque rideau étant dirigé vers l'extérieur du four. Les essais ont montré que de tels rideaux de forme conique empêchaient de façon efficace toute entrée d'air, même lorsque la vitesse relative de déplacement entre le four et la préforme atteignait une vitesse aussi élevée que 500 mm/mn.

De façon à ce que le gaz injecté dans les rideaux ait une certaine pression, le gaz non oxydant est d'abord envoyé par un tube 44 ou 46 dans une chambre de pression 48 ou 50, également de forme annulaire et entourant la chambre d'injection proprement dite. Comme illustré sur la figure 3 qui illustre le principe général avec un seul rideau de gaz, ce principe qénéral ne faisant pas partie de la présente invention, la paroi 52 séparant la chambre d'injection 40 de la chambre de pression 48 est relativement épaisse et traversée par des conduits 54 ou 56 présentant un certain angle avec la direction axiale du four de sorte que le gaz non oxydant sous pression dans la chambre de pression 48, est injecté dans la chambre 40 avec une certaine vitesse selon les flèches illustrées sur la figure. Les conduits traversant la paroi étant près les uns des autres, c'est donc un véritable rideau de forme conique qui est formé à l'intérieur de la chambre 40 et ceci à chaque extrémité du four.

En fait l'utilisation d'un seul anneau de conduits 52 tel qu'illustré sur la figure 3 n'est pas suffisante pour résoudre le problème posé par l'invention. En effet, compte-tenu de la vitesse assez grande du gaz à la sortie des conduits, il y a entraînement de molécules d'air par le gaz injecté à cause de la viscosité de ce gaz se déplaçant à vitesse élevée. Lorsque ces molécules arrivent au sommet du cône, une proportion d'entre elles pénètrent tout de même dans l'enceinte à l'orifice d'entrée du four (qui n'est pas forcément toujours le même orifice), ceci étant principalement dû à la vitesse de translation relative importante entre la préforme et le four. C'est pourquoi, il est préférable de disposer de deux anneaux de conduits produisant deux rideaux de gaz non oxydant. Bien que des molécules d'air soient entraînées malgré le premier rideau, il y a un pourcentage d'air relativement faible par rapport au gaz non oxydant entre les deux rideaux de gaz, et par conséquent le risque que de l'air puisse pénétrer dans l'enceinte est absolument négligeable.

L'injection d'un double rideau de gaz est illustrée sur la figure 4. Dans ce cas, la paroi 52 entre la chambre d'injection 40 et la chambre de pression 48 comporte deux rangées de conduits, une première rangée de conduits 58, 60 similaire à la rangée de conduits de la figure 3, et une deuxième rangée de conduits 62, 64 plus inclinés par rapport à la direction axiale et donc formant un rideau conique dont l'angle au sommet est plus faible que l'angle du cône formé par le premier rideau. Cette différence d'inclinaison des deux rideaux amène une efficacité accrue.

Dans le dispositif illustré sur la figure 4, la première rangée pourra avoir un angle avec la direction axiale compris entre 65 et 85° et la deuxième rangée avoir un angle compris entre 45 et 65°. On peut ainsi choisir un angle de 80° pour la première rangée et un angle de 50° pour la deuxième rangée.

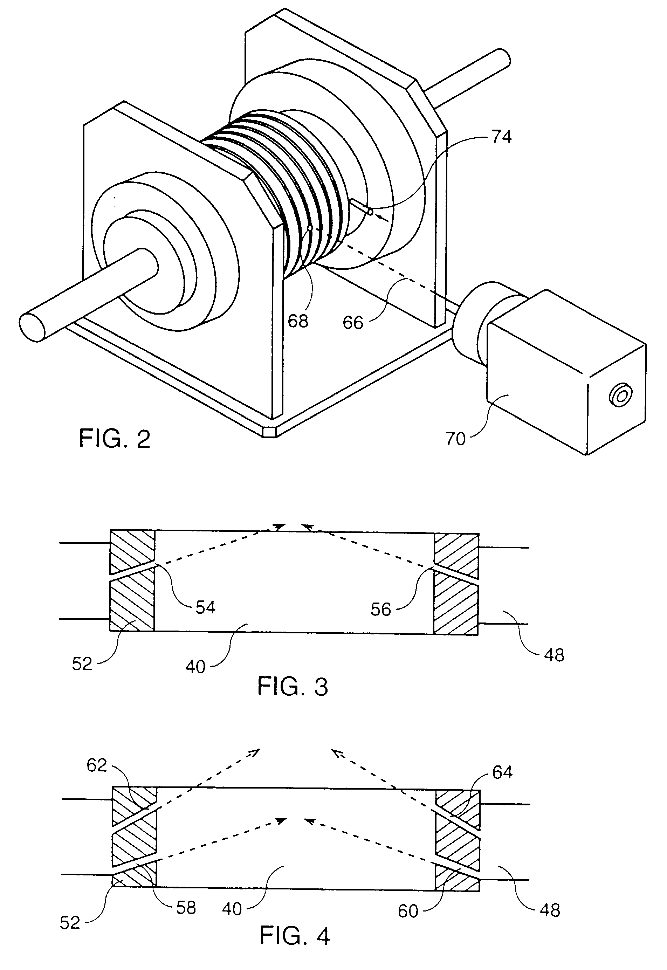

Le contrôle de température dans le four représenté en coupe sur la figure 1 est amélioré dans la mesure où il est effectué en prenant en compte le rayonnement reçu à partir de la préforme se trouvant dans l'enceinte au moyen d'une visée pyrométrique. Pour ce faire, un tube de visée aboutissant à l'endroit 23 où la préforme subit le rétreint, traverse l'enceinte extérieure en silice 18, la couche d'isolation thermique en feutre de graphite 16 et le suscepteur en graphite 12, et aboutit au coeur de l'enceinte du four sans la présence d'un hublot. Le rayonnement 66 émis par la préforme sort du four par un orifice ou tube de visée 68 se trouvant entre deux spires comme le montre la figure 2 représentant l'extérieur du four. Ce rayonnement est recueilli par un pyromètre de type bichromatique moins sensible aux conditions de mesures qu'un pyromètre monochromatique.

Bien que, comme il vient d'être décrit, l'injection de gaz non oxydant selon la dispositif de l'invention empêche toute entrée d'air dans l'enceinte du four, l'existence du trou de visée 68 pourrait laisser de l'air pénétrer dans l'enceinte. C'est pourquoi il est prévu un conduit 72 dans lequel on injecte à l'aide d'un injecteur (non montré) du gaz non oxydant par son orifice 74 situé en dehors des spires de l'inducteur. Le conduit 72 est situé dans la couche d'isolation thermique 16 et aboutit dans le tube de visée 68. Lorsque le gaz non oxydant est injecté dans le conduit 72, une partie passe dans le tube de visée 68 vers l'enceinte du four et maintient ainsi une pression dans le tube de visée. La majeure partie sort en fait vers l'extérieur du four par l'orifice du tube de visée empêchant ainsi toute entrée d'air dans le tube de visée et donc empêchant toute combustion du graphite qui pourrait se produire avec l'oxygène de l'air.

Bien que ce ne soit pas montré sur la figure, il est bien sûr possible d'asservir la puissance du four à la mesure de température de l'enceinte.

On doit noter que le gaz non oxydant qui est injecté soit dans les chambres d'injection se trouvant aux extrémités du four, soit dans le conduit aboutissant au tube de visée pyrométrique, peut être un gaz inerte tel que de l'argon ou de l'hélium, ou bien un gaz réducteur tel que de l'azote.

Bien que le mode de réalisation de l'invention qui vient d'être décrit utilise un four à induction pour l'opération de rétreint d'une préforme primaire, il va de soi que le dispositif d'injection de gaz non oxydant à l'intérieur d'un four selon l'invention peut être utilisé dans tout autre type de four dont l'enceinte comporte des parois en graphite ou en tout autre matériau susceptible d'être oxydé et pour l'application à tout autre objet qu'une préforme dans la mesure où cet objet est en mouvement relatif par rapport au four.

## Revendications

1. Dispositif d'injection de gaz non oxydant à l'intérieur d'un four du type comprenant un élément chauffant en graphite (12) pour chauffer une enceinte cylindrique (14) comportant un orifice d'entrée (24) et un orifice de sortie (26), le four étant utilisé pour chauffer un objet longiforme dont une partie se trouve dans ladite enceinte entre l'orifice d'entrée et l'orifice de sortie, ledit objet et ledit four étant en déplacement relatif l'un par rapport à l'autre selon la direction axiale du four ;
ledit dispositif d'injection étant caractérisé en ce qu'il comprend deux anneaux de conduits de passage de gaz non oxydant (58, 60 et 62, 64), les conduits de chacun des anneaux étant inclinés d'un même angle par rapport à la direction axiale du four et ledit angle étant différent pour les deux anneaux de conduits, de manière à injecter le gaz non oxydant selon deux rideaux de gaz en forme de cône, le gaz étant dirigé vers le sommet du cône et dans la direction s'éloignant de ladite enceinte, de manière à empêcher toute entrée d'air dans ladite enceinte pouvant provoquer la combustion du graphite dudit élément chauffant.

2. Dispositif selon la revendication 1, comportant, à chacun des orifices d'entrée (24) et de sortie (26) de ladite enceinte (14), une chambre de pression (48 ou 50) dans laquelle est envoyé le gaz non oxydant au moyen d'un tube d'arrivée de gaz (44 ou 46), et une chambre d'injection (40 ou 42) séparée de ladite chambre de pression par une paroi comportant lesdits anneaux de conduits de passage de gaz (58, 60 et 62, 64).

3. Dispositif selon la revendication 1 ou 2, comprenant en outre un deuxième injecteur annulaire (28, 30) à chaque orifice du four recevant du gaz non oxydant au moyen d'un tube d'arrivée de gaz (32, 34) et entourant une bague (36, 38) pour injecter le gaz non oxydant dans la direction axiale du four et vers le centre de l'enceinte de manière à créer une surpression à l'intérieur de l'enceinte empêchant toute entrée d'air.

4. Dispositif selon l'une des revendications 1 à 3, comportant en outre un dispositif de mesure de température comprenant un tube de visée (68) accessible de l'extérieur et traversant l'enveloppe d'isolation thermique du four (16) et ledit suscepteur en graphite (12), un pyromètre (70) situé à l'extérieur du four à l'entrée dudit tube de visée pour recueillir le rayonnement (66) émis par ladite préforme approximativement à l'endroit (23) subissant l'opération de rétreint et ainsi mesurer sa température, et un injecteur de gaz pour injecter du gaz non oxydant dans un conduit (72) débouchant dans ledit tube de visée de sorte que le gaz non oxydant injecté ressorte à l'extérieur en empruntant ledit tube de visée et empêche toute entrée d'air dans ledit tube de visée.

5. Dispositif selon l'une des revendications 1 à 4, dans lequel ledit four est un four à induction formé d'un inducteur à spires (10) et d'un suscepteur en graphite (12) constituant ledit élément chauffant.

6. Dispositif selon la revendication 5, dans lequel ledit objet longiforme chauffé dans l'enceinte du four est une préforme primaire subissant une opération de rétreint.

7. Dispositif selon la revendication 6, dans lequel ledit tube de visée (68) a son extrémité intérieure à l'enceinte située approximativement au centre de l'enceinte pour recueillir le rayonnement (66) émis par l'endroit (23) de la préforme primaire subissant l'opération de rétreint.

8. Dispositif selon l'une quelconque des revendications précédentes, dans lequel ledit gaz non oxydant est de l'argon.

## Patentansprüche

1. Vorrichtung zum Einblasen eines nichtoxidierenden Gases in das Innere eines Ofens, von der Art, die ein Heizelement (12) aus Graphit zum Heizen einer zylindrischen Umhüllung (14) mit einer
Eintrittsöffnung (24) und einer Austrittsöffnung (26) umfaßt, wobei der Ofen zum Heizen eines langgestreckten Gegenstandes verwendet wird, von dem sich ein Teil in der genannten Umhüllung zwischen der Eintrittsöffnung und der Austrittsöffnung befindet, und der genannte Gegenstand und der genannte Ofen in Axialenrichtung des Ofens relativ zueinander verschoben werden, wobei die genannte Vorrichtung zum Einblasen
**dadurch gekennzeichnet ist, daß** sie zwei Leitungsringe für den Durchtritt von nicht oxidierendem Gas (58, 60 und 62, 64) aufweist, wobei die Leitungen jedes einzelnen Ringes zur Axialenrichtung des Ofens in einem gleichen Winkel geneigt sind, und der genannte Winkel für die beiden Leitungsringe verschieden ist, um das nicht oxidierende Gas entsprechend zweier kegelförmiger Gasvorhänge einzublasen, wobei das Gas zur Kegelspitze und in die Richtung, die von der Umhüllung wegführt, gerichtet ist, um damit jeglichen Eintritt von Luft in die genannte Umhüllung zu verhindern, was ein Verbrennen des Graphites des genannten Heizelementes hervorrufen könnte.

2. Vorrichtung nach Anspruch 1, welche jeweils an der Eintrittsöffnung (24) und an der Austrittsöffnung (26) der genannten Umhüllung (14) eine Druckkammer (48 oder 50), in die das nicht oxidierende Gas mittels eines Zuleitungsrohres (44 oder 46) eingeleitet wird, und eine Kammer zum Einblasen (40 oder 42), die von der genannten Druckkammer durch eine Wand mit den genannten Leitungsringen für den Gasdurchtritt (58, 60 und 62, 64) getrennt ist, aufweist.

3. Vorrichtung nach Anspruch 1 oder 2, welche außerdem an jeder Öffnung des Ofens eine zweite ringförmige, einen Reifen (36, 38) umgebende Düse (28, 30) aufweist, die nicht oxidierendes Gas mittels eines Zuleitungsrohres (32, 34) empfängt und das nicht oxidierende Gas in die Axialenrichtung des Ofens und zur Mitte der Umhüllung einbläst, um einen Überdruck im Inneren der Umhüllung zu schaffen, der jeglichen Lufteintritt verhindert.

4. Vorrichtung nach einem der Ansprüche 1 bis 3, welche außerdem eine Vorrichtung zur Temperaturmessung aufweist, die ein von außen zugängliches Beobachtungsrohr (68), das die Hülle zur thermischen Isolierung des Ofens (16) und den genannten Graphitaufnehmer (12) durchquert, ein außerhalb des Ofens am Eingang des genannten Beobachtungsrohres befindliches Pyrometer (70), zur Aufnahme der von dem genannten Vorformling etwa an der Stelle (23) ausgesandten Strahlung (66), wo an diesem die Verringerung des Durchmessers bewirkt wird, wobei somit die Temperatur gemessen wird, und eine Gasdüse, um nicht oxidierendes Gas in eine Leitung (72), die in das genannte Beobachtungsrohr mündet, einzublasen, so daß das eingeblasene nicht oxidierende Gas mittels Durchströmen des genannten Beobachtungsrohres wieder ins Freie tritt, und so jeglichen Lufteintritt in das genannte Beobachtungsrohr verhindert, umfaßt.

5. Vorrichtung nach einem der Ansprüche 1 bis 4, bei welcher der genannte Ofen ein Induktionsofen ist, der aus einem Induktor mit Schraubenwindungen (10) und einem Graphitaufnehmer (12), der das genannte Heizelement ist, gebildet wird

6. Vorrichtung nach Anspruch 5, bei welcher der genannte in der Umhüllung des Ofens erhitzte langgestreckte Gegenstand ein primärer Vorformling ist, an dem eine Maßnahme zur Verringerung des Querschnittes bewirkt wird.

7. Vorrichtung nach Anspruch 6, bei welcher das innere Ende des genannten Beobachtungsrohrs (68) an der Umhüllung etwa in deren Mitte befindlich angeordnet ist, um die von dem primären Vorformling an der Stelle (23) ausgesandte Strahlung (66), wo an diesem die Verringerung des Querschnittes bewirkt wird, aufzunehmen.

8. Vorrichtung nach einem der vorhergehenden Ansprüche, bei welcher das genannte nicht oxidierende Gas Argon ist.

## Claims

1. Device for injecting non-oxidizing gas into a furnace of the type comprising a graphite heating element (12) for heating a cylindrical enclosure (14) having an inlet orifice (24) and an outlet orifice (26), the furnace being used to heat an elongate object part of which is in said enclosure between the inlet orifice and the outlet orifice, said object and said furnace being in relative movement along the axial direction of the furnace;
said device being characterized in that it comprises two rings of conduits (58, 60 and 62, 64) through which non-oxidizing gas passes, the conduits of each ring being inclined at the same angle to the axial direction of the furnace and said angle being different for the two rings of conduits, so as to inject the non-oxidizing gas in two conical shape gas curtains, the gas being directed towards the apex of the cone and in the direction away from said enclosure to prevent any entry into said enclosure of air that could cause combustion of the graphite of said heating element.

2. A device according to claim 1 including, at the inlet orifice (24) and at the outlet orifice (26) of said enclosure (14) a respective pressure chamber (48 or 50) into which the non-oxidizing gas is fed by means of a gas feed tube (44 or 46) and an injection chamber (40 or 42) separated from said pressure chamber by a wall incorporating said rings of conduits (58, 60 and 62, 64) through which the gas passes.

3. A device according to claim 1 or claim 2 further comprising a second annular injector (28, 30) at each orifice of the furnace receiving the non-oxidizing gas through a gas feed tube (32, 34) and surrounding a ring (36, 38) for injecting the non-oxidizing gas in the axial direction of the furnace and towards the center of the enclosure so as to create a pressure increase inside the enclosure preventing all entry of air.

4. A device according to any one of claims 1 to 3 further comprising a temperature measuring device comprising a sighting tube (68) accessible from the outside and passing through the thermal insulation jacket of the furnace (16) and said graphite concentrator (12), a pyrometer (70) outside the furnace at the inlet of said sighting tube to collect radiation (66) emitted by said preform approximately at the location (23) at which the shrinking occurs and thereby measure its temperature, and a gas injector for injecting the non-oxidizing gas into a conduit (72) leading into said sighting tube so that the non-oxidizing gas injected flows to the outside through said sighting tube and prevents any entry of air into said sighting tube.

5. A device according to any one of claims 1 to 4 wherein said furnace is an induction furnace comprising a field coil (10) with turns and a graphite concentrator (12) constituting said heating element.

6. A device according to claim 5 wherein said elongate body heated in the enclosure of the furnace is a primary preform undergoing shrinking.

7. A device according to claim 6 wherein said sighting tube (68) has its end inside the enclosure approximately at the center of the enclosure to collect radiation (66) emitted at the location (23) of the primary preform undergoing shrinking.

8. A device according to any one of the preceding claims wherein said non-oxidizing gas is argon.
